(19) Europäisches Patentamt
European Patent Office
Office européen des brevets

(11) **EP 3 134 949 B1**

(12) **EUROPÄISCHE PATENTSCHRIFT**

(45) Veröffentlichungstag und Bekanntmachung des Hinweises auf die Patenterteilung:
**19.05.2021 Patentblatt 2021/20**

(21) Anmeldenummer: **15701955.5**

(22) Anmeldetag: **23.01.2015**

(51) Int Cl.:
*H02J 1/08* *(2006.01)*       *B60R 16/033* *(2006.01)*
*B60R 16/04* *(2006.01)*      *H02J 7/00* *(2006.01)*
*H02J 1/00* *(2006.01)*

(86) Internationale Anmeldenummer:
**PCT/EP2015/051349**

(87) Internationale Veröffentlichungsnummer:
**WO 2015/110576 (30.07.2015 Gazette 2015/30)**

(54) **BORDNETZ**

VEHICLE ELECTRICAL SYSTEM

RÉSEAU DE BORD

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.01.2014 DE 102014201346**

(43) Veröffentlichungstag der Anmeldung:
**01.03.2017 Patentblatt 2017/09**

(73) Patentinhaber:
• **Robert Bosch GmbH**
  **70442 Stuttgart (DE)**
• **Samsung SDI Co., Ltd.**
  **Yongin-si, Gyeonggi-do 446-577 (KR)**

(72) Erfinder: **FINK, Holger**
  **70567 Stuttgart (DE)**

(74) Vertreter: **Bee, Joachim et al**
  **Robert Bosch GmbH**
  **Zentralabteilung Patente**
  **Postfach 30 02 20**
  **70442 Stuttgart (DE)**

(56) Entgegenhaltungen:
  WO-A1-01/37393          DE-A1- 10 057 259
  DE-A1-102009 028 147    DE-A1-102012 003 309
  DE-A1-102012 010 711

**Beschreibung**

Stand der Technik

Die Erfindung betrifft ein Bordnetz für ein Kraftfahrzeug, und ein Kraftfahrzeug mit einem derartigen Bordnetz.

In Kraftfahrzeugen mit Verbrennungsmotor wird zur Versorgung des elektrischen Anlassers oder Starters für den Verbrennungsmotor sowie weiterer elektrischer Vorrichtungen des Kraftfahrzeuges ein Bordnetz vorgesehen, welches standardmäßig mit 12 Volt betrieben wird. Beim Starten des Verbrennungsmotors wird über das Bordnetz von einer Starterbatterie eine Spannung einem Starter zur Verfügung gestellt, welcher den Verbrennungsmotor startet, wenn beispielsweise durch ein entsprechendes Startersignal ein Schalter geschlossen wird. Ist der Verbrennungsmotor gestartet, treibt dieser einen elektrischen Generator an, welcher dann eine Spannung von etwa 12 Volt erzeugt und über das Bordnetz den verschiedenen elektrischen Verbrauchern im Fahrzeug zur Verfügung stellt. Der elektrische Generator lädt dabei auch die durch den Startvorgang belastete Starterbatterie wieder auf. Wird die Batterie über das Bordnetz geladen, kann die tatsächliche Spannung auch über der Nennspannung liegen, z. B. bei 14 V oder bei 14,4 V. Das Bordnetz mit 12 V, bzw. 14 V Spannung wird im Rahmen der vorliegenden Offenbarung auch als ein Niederspannungsbordnetz bezeichnet.

Es ist bekannt, in Elektro- und Hybridfahrzeugen ein weiteres Bordnetz mit einer Nennspannung von 48 V zu verwenden, welches im Rahmen der Erfindung auch als ein Hochspannungsbordnetz bezeichnet wird.

Das Dokument DE 100 57 259 A1 offenbart ein Mehrspannungsbordnetz für ein Kraftfahrzeug, welches eine durch Schalter unterbrechbare Reihenschaltung mehrerer Batterien aufweist, wobei durch eine geeignete Betätigung von weiteren externen Schaltern auf zwei Versorgungsleitungen zwei verschiedene Ausgangsspannungen erzeugbar sind

WO01/37393 A1 offenbart ein Mehrspannungsbordnetz mit einer Hochspannungsbatterie mit Niederspannungsanzapfungen, die über Schalter mit dem Niederspannungsbordnetz verbindbar sind.

Offenbarung der Erfindung

Die Erfindung stellt ein Bordnetz für ein Kraftfahrzeug bereit, wobei das Bordnetz ein Niederspannungsteilnetz für zumindest einen Niederspannungsverbraucher und ein Hochspannungsteilnetz für zumindest einen Hochspannungsverbraucher und einen Starter-Generator aufweist, wobei das Hochspannungsteilnetz mit dem Niederspannungsteilnetz über eine Koppeleinheit verbunden ist, welche eingerichtet ist, dem Hochspannungsteilnetz Energie zu entnehmen und dem Niederspannungsteilnetz zuzuführen, wobei das Hochspannungsteilnetz eine Batterie aufweist, die eingerichtet ist, die Hochspannung zu erzeugen und an das Hochspannungsteilnetz auszugeben, und die zumindest zwei Batterieeinheiten mit Einzelspannungsabgriffen aufweist, die an die Koppeleinheit geführt sind, wobei die Koppeleinheit eingerichtet ist, die Batterieeinheiten dem Niederspannungsteilnetz selektiv zuzuschalten.

Die Erfindung besitzt den Vorteil, dass durch das Niederspannungsteilnetz elektrische Verbraucher betrieben werden können, die auf eine niedrige erste Spannung ausgelegt sind, und für Hochleistungsverbraucher das Hochspannungsteilnetz bereitsteht, d.h. das Teilbordnetz mit einer gegenüber der ersten Spannung erhöhten Spannung. Die Versorgung des Niederspannungsteilnetzes wird den Lade- und Entladevorgängen im Hochspannungsteilnetz überlagert. Die Niederspannungsteilnetzversorgung über das Hochspannungsteilnetz findet dabei unidirektional statt, d. h. die Koppeleinheit stellt den Energietransfer bevorzugt nur in eine Richtung bereit.

Das Bordnetz kann sowohl bei stationären Anwendungen, z.B. bei Windkraftanlagen, als auch in Fahrzeugen, z.B. in Hybrid- und Elektrofahrzeugen, zum Einsatz kommen. Insbesondere kann das Bordnetz bei Fahrzeugen eingesetzt werden, die Start-Stopp-Systeme aufweisen.

Das vorgestellte System, d. h. das Bordnetz und ein zugehöriges Steuergerät, beispielsweise ein Batteriemanagementsystem, eignet sich insbesondere für den Einsatz in Fahrzeugen, die einen 48-Volt-Generator und einen 14-Volt-Starter aufweisen, wobei der 14-Volt-Starter vorzugsweise für Start-/Stopp-Systeme ausgelegt ist.

Das vorgestellte System eignet sich insbesondere für den Einsatz in Fahrzeugen, die ein sogenanntes Boost-Rekuperationssystem (BRS) aufweisen. Bei Boost-Rekuperationssystemen (BRS) wird elektrische Energie bei Bremsvorgängen, bei Bergabfahrten oder im Segelbetrieb gewonnen, um damit die elektrischen Verbraucher zu versorgen. Das BRS erhöht die Effizienz des Systems, so dass Kraftstoff eingespart werden kann bzw. die Emissionen verringert werden können. Die Batterie im Hochspannungsteilnetz kann dabei den Verbrennungsmotor unterstützen, was als so genannter Boost bezeichnet wird, oder bei niedrigen Geschwindigkeiten für kurze Strecken sogar für rein elektrisches Fahren eingesetzt werden, z.B. bei einem elektrischen Ein- und Ausparken.

Die Begriffe "Batterie" und "Batterieeinheit" werden in der vorliegenden Beschreibung, dem üblichen Sprachgebrauch angepasst, für Akkumulator bzw. Akkumulatoreinheit verwendet. Die Batterie umfasst eine oder mehrere Batterieeinheiten, die eine Batteriezelle, ein Batteriemodul, einen Modulstrang oder ein Batteriepack bezeichnen können. Die Batteriezellen sind dabei vorzugsweise räumlich zusammengefasst und schaltungstechnisch miteinander verbunden, beispielsweise seriell oder parallel zu Modulen verschaltet. Mehrere Module können so genannte Batteriedirektkonverter (BDC, *battery direct converter)* bilden und mehrere Batteriedirektkonverter einen Batteriedirektinverter (BDI, *battery direct inverter).*

Vorteilhafte Weiterbildungen und Verbesserungen des im unabhängigen Anspruch angegebenen Gegenstands sind durch die in den abhängigen Ansprüchen aufgeführten Maßnahmen möglich.

So ist von Vorteil, wenn die selektiv zuschaltbaren Batterieeinheiten jeweils zur Bereitstellung der Niederspannung ausgelegt sind. Die Batterieeinheiten können also abwechselnd beansprucht werden, die Niederspannung bereitzustellen, z. B. um ein Start-Stopp-System zu unterstützen, was zu einer erhöhten Lebensdauer der Batterieeinheit führt.

Nach einer bevorzugten Ausführungsform weist die Koppeleinheit zumindest einen rückwärtssperrfähigen Schalter auf. Bevorzugt eignen sich die rückwärtssperrfähigen Schalter zur Zu- und Wegschaltung einer selektiv zuschaltbaren Batterieeinheit zum Niederspannungsteilnetz. Diese Schalter besitzen die Eigenschaft, dass sie im Zustand "ein" einen Stromfluss nur in eine Richtung ermöglichen und im Zustand "aus" eine Sperrspannung beiderlei Polarität aufnehmen können.

Bei der Zuschaltung einer Batterieeinheit zum Niederspannungsteilnetz wird bevorzugt zumindest ein rückwärtssperrfähiger Schalter, besonders bevorzugt werden zwei rückwärtssperrfähige Schalter betätigt. Bei der Abschaltung einer Batterieeinheit zum Niederspannungsteilnetz wird ebenfalls bevorzugt zumindest ein rückwärtssperrfähiger, besonders bevorzugt werden zwei rückwärtssperrfähige Schalter betätigt.

Nach einer bevorzugten Ausführungsform weist die Koppeleinheit zumindest einen vorwärtssperrfähigen Schalter auf. Bevorzugt eignen sich die vorwärtssperrfähigen Schalter zur Serienschaltung der selektiv zuschaltbaren Batterieeinheiten. Bevorzugt ist vorgesehen, dass bei der Trennung der Leitung zwischen zwei Batterieeinheiten zumindest ein vorwärtssperrfähiger Schalter betätigt wird. Ebenso ist bevorzugt vorgesehen, dass bei der Verbindung der Leitung zwischen den Batterieeinheiten zumindest ein vorwärtssperrfähiger Schalter betätigt wird.

Nach einer bevorzugten Ausführungsform ist die Koppeleinheit dazu eingerichtet, zumindest zwei Batterieeinheiten bezüglich des Niederspannungsteilnetzes miteinander parallel zu schalten. Hierdurch wird ermöglicht, dass bei stark abweichenden Ladezuständen der beiden Batterieeinheiten eine Versorgung des Niederspannungsteilnetzes aus derjenigen Batterieeinheit erfolgt, welche den höheren Ladezustand aufweist bzw. die höhere Spannung bereitstellt. Bei gleichen oder ähnlichen Ladezuständen der Batterieeinheiten wird das Niederspannungsteilnetz aus beiden Batterieeinheiten versorgt.

Nach einer bevorzugten Ausführungsform ist die Koppeleinheit dazu eingerichtet, zumindest zwei Batterieeinheiten bezüglich des Hochspannungsteilnetzes seriell, d.h. miteinander in Reihe zu schalten.

Zusätzlich kann vorgesehen sein, dass das Niederspannungsteilnetz zumindest einen Kondensator aufweist. Der Kondensator ist bevorzugt dazu eingerichtet, die Niederspannung bei einem Wechsel der zugeschalteten Batterieeinheit weiter zu stabilisieren. Der Kondensator eignet sich außerdem bevorzugt auch als ein Energiespeicher, welcher eingerichtet ist, zumindest kurzfristig die Niederspannung zu erzeugen und an das Niederspannungsteilnetz auszugeben.

Der Spannungseinbruch im Niederspannungsteilnetz kann weiter vorteilhaft verringert werden, wenn die Umschaltung zu solchen Zeitpunkten erfolgt, bei denen der Bordnetzstrom möglichst gering ist. Dieses kann beispielsweise durch Auswertung eines Signals für den Bordnetzstrom und davon abhängiger Ansteuerung der Schalter der Koppeleinheit erfolgen. Darüber hinaus kann auch eine Synchronisierung mit einem Verbrauchermanagementsystem erfolgen, um Hochleistungsverbraucher, wie z.B. Heizsysteme, kurzzeitig ohne Komforteinbußen abzuschalten, um den Umschaltvorgang der Batterieeinheiten ohne nennenswerten Spannungseinbruch zu ermöglichen.

Bevorzugt weist das Bordnetz ein Steuergerät zur Steuerung der Koppeleinheit zur Schaltung der Batterieeinheiten auf. Das Steuergerät kann beispielsweise einem der Batterie zugeordneten Batteriemanagementsystem zugeordnet sein, das beispielsweise weitere Einheiten umfasst, die eingerichtet sind, Messdaten über Temperaturen, bereitgestellte Spannungen, abgegebene Ströme und Ladungszustände der Batterie bzw. der Batterieeinheiten zu erfassen, zu verarbeiten und hieraus beispielsweise Aussagen über den Gesundheitszustand der Batterie zu treffen. Das Steuergerät zur Steuerung der Koppeleinheit kann ein Computerprogramm aufweisen, welches auf einem maschinenlesbaren Speichermedium gespeichert sein kann, etwa auf einem permanenten oder wiederbeschreibbaren Speichermedium, oder in Zuordnung zu einer Computereinrichtung, beispielsweise auf einem tragbaren Speicher, wie einer CD-ROM, DVD, Blu-ray Disk, einem USB-Stick oder einer Speicherkarte. Zusätzlich und alternativ dazu kann das Computerprogramm auf einer Computereinrichtung, wie etwa auf einem Server oder einem Cloud-Server, zum Herunterladen bereitgestellt werden, beispielsweise über ein Datennetzwerk, wie das Internet, oder eine Kommunikationsverbindung, wie etwa eine Telefonleitung oder eine drahtlose Verbindung.

Erfindungsgemäß wird außerdem ein Kraftfahrzeug angegeben, mit einem Verbrennungsmotor und einem zuvor beschriebenen Bordnetz.

Vorteile der Erfindung

Die Erfindung stellt ein kostengünstiges Bordnetz mit einem Lithium-Ionen-Batteriesystem für Fahrzeuge bereit, das ein Hochspannungsteilnetz, ein Niederspannungsteilnetz und ein Boost-Rekuperationssystem mit unidirektionaler Versorgung des Niederspannungsteilnetzes aufweist. Hierbei kann gegenüber bekannten Systemen ein potentialtrennender DC/DC-Wandler entfallen, sowie die Blei-Säure-Batterie. Außerdem ist kein separater Starter im Niederspannungsteilnetz nötig. Das System zeichnet sich daher durch ein verringertes Volumen und durch ein geringeres Gewicht gegenüber aktuell in der Entwicklung befindlichen Boost-Rekuperationssystemen aus. Das Boost-Rekuperationssystem kann außerdem bei geeigneter Auslegung gegenüber aktuell in der Entwicklung befindlichen Boost-Rekuperationssystemen deutlich mehr Energie speichern und dadurch bei längeren Bremsvorgängen oder Bergabfahrten mehr elektrische Energie im System zurückgewinnen.

Kurze Beschreibung der Zeichnungen

Beispielhafte Ausführungsbeispiele sind in den Zeichnungen dargestellt und in der nachfolgenden Beschreibung näher erläutert. Es zeigen

Figur 1    ein Niederspannungsbordnetz nach dem Stand der Technik,

Figur 2    ein Bordnetz mit einem Hochspannungsteilnetz und einem Niederspannungsteilnetz und einem unidirektionalen, potentialtrennenden DC/DC-Wandler,

Figur 3    ein Bordnetz mit einem Hochspannungsteilnetz und einem Niederspannungsteilnetz und einem bidirektionalen, potentialtrennenden DC/DC-Wandler,

Figur 4    ein Bordnetz mit einem Hochspannungsteilnetz und einem Niederspannungsteilnetz und einem unidirektionalen, galvanisch nicht trennenden DC/DC-Wandler,

Figur 5    eine Koppeleinheit in einem beispielhaften Betriebszustand,

Figur 6    die Koppeleinheit aus Figur 5 in einem weiteren beispielhaften Betriebszustand,

Figur 7    die Koppeleinheit aus Figur 5 in einem weiteren beispielhaften Betriebszustand und

Figur 8    rückwärts- und vorwärtssperrfähige Schalter.

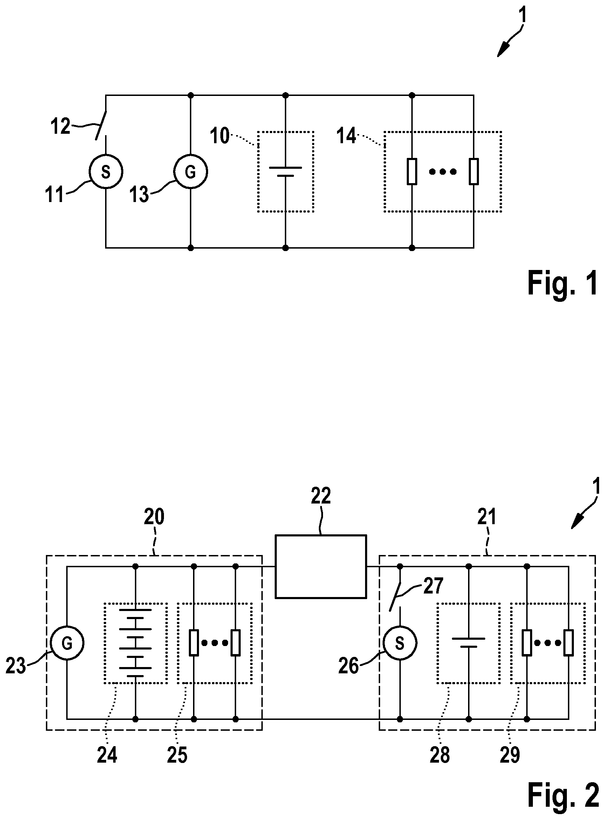

Figur 1 zeigt ein Bordnetz 1 nach dem Stand der Technik. Beim Starten eines Verbrennungsmotors wird über das Bordnetz 1 von einer Starterbatterie 10 eine Spannung einem Starter 11 zur Verfügung gestellt, welcher den Verbrennungsmotor (nicht dargestellt) startet, wenn beispielsweise durch ein entsprechendes Startersignal ein Schalter 12 geschlossen wird. Ist der Verbrennungsmotor gestartet, treibt dieser einen elektrischen Generator 13 an, welcher dann eine Spannung von etwa 12 Volt erzeugt und über das Bordnetz 1 den verschiedenen elektrischen Verbrauchern 14 im Fahrzeug zur Verfügung stellt. Der elektrische Generator 13 lädt dabei auch die durch den Startvorgang belastete Starterbatterie 10 wieder auf.

Figur 2 zeigt ein Bordnetz 1 mit einem Hochspannungsteilnetz 20 und einem Niederspannungsteilnetz 21 und einem unidirektionalen, potentialtrennenden DC/DC-Wandler 22, der eine Koppeleinheit zwischen dem Hochspannungsteilnetz 20 und dem Niederspannungsteilnetz 21 bildet. Das Bordnetz 1 kann ein Bordnetz eines Fahrzeugs, insbesondere eines Kraftfahrzeugs, Transportfahrzeugs oder Gabelstaplers, sein.

Das Hochspannungsteilnetz 20 ist beispielsweise ein 48-Volt-Bordnetz mit einem elektrischen Generator 23, welcher von einem Verbrennungsmotor (nicht dargestellt) betreibbar ist. Der Generator 23 ist in diesem Ausführungsbeispiel ausgebildet, in Abhängigkeit von einer Drehbewegung des Motors des Fahrzeugs eine elektrische Energie zu erzeugen und in das Hochspannungsteilnetz 20 einzuspeisen. Das Hochspannungsteilnetz 20 umfasst weiterhin eine Batterie 24, welche beispielsweise als eine Lithium-Ionen-Batterie ausgebildet sein kann und welche eingerichtet ist, die nötige Betriebsspannung dem Hochspannungsteilnetz auszugeben. Im Hochspannungsteilnetz 20 sind weitere Lastwiderstände 25 angeordnet, welche beispielsweise durch wenigstens einen, bevorzugt durch eine Mehrzahl von elektrischen Verbrauchern des Kraftfahrzeugs gebildet sein können, die mit der Hochspannung betrieben werden.

Im Niederspannungsteilnetz 21, welches ausgangsseitig an dem DC/DC-Wandler 22 angeordnet ist, befinden sich ein Starter 26, der eingerichtet ist, einen Schalter 27 zu schließen um den Verbrennungsmotor zu starten, sowie ein Energiespeicher 28, der eingerichtet ist, die Niederspannung in Höhe von beispielsweise 12 V oder 14 V für das Niederspannungsteilnetz 21 bereitzustellen. Im Niederspannungsteilnetz 21 sind weitere Verbraucher 29 angeordnet, die mit der Niederspannung betrieben werden. Der Energiespeicher 28 umfasst beispielsweise galvanische Zellen, insbesondere solche einer Blei-Säurebatterie, welche in vollgeladenem Zustand *(state of Charge,* SOC = 100%) üblicherweise eine Spannung von 12,8 Volt aufweist. Bei entladener Batterie *(state of charge,* SOC = 0%) weist der Energiespeicher 28 unbelastet eine Klemmenspannung von typischerweise 10,8 Volt auf. Die Bordnetzspannung im Niederspannungsteilnetz 21 liegt im Fahrbetrieb, je nach Temperatur und Ladezustand des Energiespeichers 28, etwa im Bereich zwischen 10,8 Volt und 15 Volt.

Der DC/DC-Wandler 22 ist eingangsseitig mit dem Hochspannungsteilnetz 20 und mit dem Generator 23 verbunden. Der DC/DC-Wandler 22 ist ausgangsseitig mit dem Niederspannungsteilnetz 21 verbunden. Der DC/DC-Wandler 22 ist ausgebildet, eine eingangsseitig empfangene Gleichspannung, beispielsweise eine Gleichspannung, mit der das Hochspannungsteilnetz betrieben wird, beispielsweise zwischen 12 und 48 Volt, zu empfangen und eine Ausgangsspannung zu erzeugen, welche von der eingangsseitig empfangenen Spannung verschieden ist, insbesondere eine Ausgangsspannung zu erzeugen, welche kleiner ist als die eingangsseitig empfangene Spannung, beispielsweise 12 V oder 14 V.

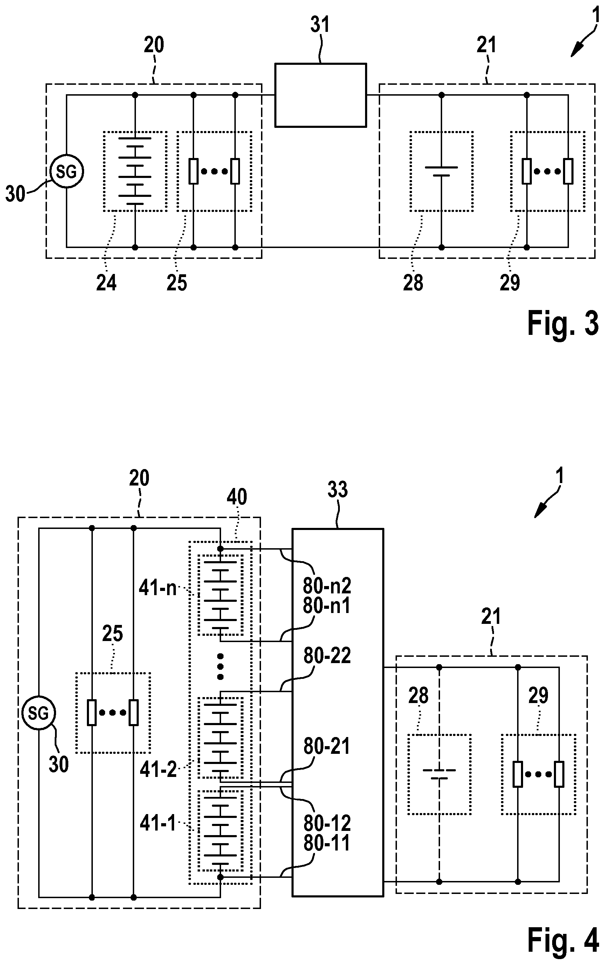

Figur 3 zeigt ein Bordnetz 1 mit einem Hochspannungsteilnetz 20 und einem Niederspannungsteilnetz 21, welche durch einen bidirektionalen, potentialtrennenden DC/DC-Wandler 31 verbunden sind. Das dargestellte Bordnetz 1 ist im Wesentlichen wie das in Figur 2 dargestellte Bordnetz ausgebildet, wobei der Generator im Hochspannungsteilnetz eingebunden ist und für den Energietransfer zwischen den Teilbordnetzen 20, 21 ein DC/DC-Wandler 31 zum Einsatz kommt, der potentialtrennend ausgeführt ist. In beiden Teilnetzen 20, 21 sind außerdem Batterien 24, 28 und Verbraucher 25, 29 angeordnet, wie mit Bezug zu Figur 2 beschrieben. Im Wesentlichen unterscheidet sich das in Figur 3 dargestellte System durch die Einbindung des Starters. Während in dem in Figur 2 dargestellten System der Starter 26 im Niederspannungsteilnetz 21 angeordnet ist und hierdurch der DC/DC-Wandler 22 unidirektional für einen Energietransport vom Hochspannungsteilnetz 20 in das Niederspannungsteilnetz 21 ausgelegt sein kann, wird bei der in Figur 3 dargestellten Architektur ein Starter-Generator 30 im Hochspannungsteilnetz 20 eingesetzt. In diesem Fall ist der DC/DC-Wandler 31 bidirektional ausgeführt, sodass die Lithium-Ionen-Batterie 24 ggf. über das Niederspannungsteilnetz 21 geladen werden kann. Die Starthilfe des Niederspannungsfahrzeugs erfolgt dann über die Niederspannungsschnittstelle und den DC/DC-Wandler 31.

Figur 4 zeigt ein Bordnetz 1 mit einem Hochspannungsteilnetz 20 und einem Niederspannungsteilnetz 21, beispielsweise ein Bordnetz 1 eines Fahrzeugs, insbesondere eines Kraftfahrzeugs, Transportfahrzeugs oder Gabelstaplers. Das Bordnetz 1 eignet sich insbesondere für den Einsatz bei Fahrzeugen mit einem 48-Volt-Generator, einem 14-Volt-Starter und einem Boost-Rekuperationssystem.

Das Hochspannungsteilnetz 20 umfasst einen Startgenerator 30, welcher einen Verbrennungsmotor (nicht dargestellt) starten kann und von diesem betreibbar ist. Der Startgenerator 30 ist ausgebildet, in Abhängigkeit von einer Drehbewegung des Motors des Fahrzeugs elektrische Energie zu erzeugen und in das Hochspannungsteilnetz 20 einzuspeisen. Im Hochspannungsteilnetz 20 sind weitere Lastwiderstände 25 angeordnet, welche beispielsweise durch wenigstens einen, bevorzugt durch eine Mehrzahl von elektrischen Verbrauchern des Kraftfahrzeugs gebildet sein können, die mit der Hochspannung betrieben werden.

Das Hochspannungsteilnetz 20 umfasst außerdem eine Batterie 40, welche beispielsweise als eine Lithium-Ionen-Batterie ausgebildet sein kann und welche eingerichtet ist, die Betriebsspannung von 48 Volt dem Hochspannungsteilnetz auszugeben. Die Lithium-Ionen-Batterie 40 weist bei einer Nennspannung von 48 Volt bevorzugt eine Mindestkapazität von ca. 15 Ah auf, um die erforderliche elektrische Energie speichern zu können.

Die Batterie 40 weist mehrere Batterieeinheiten 41-1, 41-2, ...41-n auf, wobei den Batterieeinheiten 41 mehrere Batteriezellen zugeordnet sind, welche üblicherweise in Serie und teilweise zusätzlich parallel zueinander geschaltet werden, um die geforderten Leistungs- und Energiedaten mit der Batterie 40 zu erzielen. Die einzelnen Batteriezellen sind beispielsweise Lithium-Ionen-Batterien mit einem Spannungsbereich von 2,8 bis 4,2 Volt.

Den Batterieeinheiten 41-1, 41-2, ...41-n sind Einzelspannungsabgriffe 80-11, 80-12, 80-21, 80-22, ...80-n1, 80-n2 zugeordnet, über welche die Spannung einer Koppeleinheit 33 zugeführt wird. Die Koppeleinheit 33 hat die Aufgabe, zumindest eine der Batterieeinheiten 41 der Batterie 40 auf das Niederspannungsteilnetz 21 zu dessen Betrieb oder Unterstützung durchzuschalten, und diese bezüglich des Hochspannungsteilnetzes 20 geeignet zu verschalten.

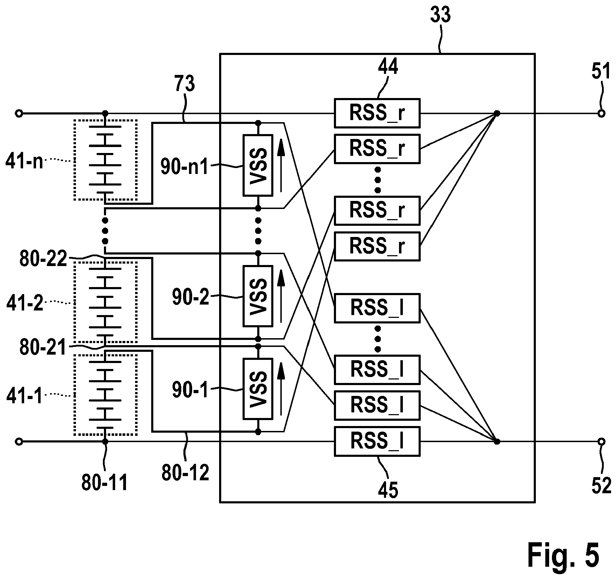

Die Koppeleinheit 33 koppelt das Hochspannungsteilnetz 20 mit dem Niederspannungsteilnetz 21 und stellt ausgangsseitig dem Niederspannungsteilnetz 21 die nötige Betriebsspannung bereit, beispielsweise 12 V oder 14 V. Der Aufbau und die Funktionsweise der Koppeleinheit 33 werden mit Bezug zu den Figuren 5 bis 7 beschrieben.

Das Niederspannungsteilnetz 21 umfasst die Niederspannungsverbraucher 29, welche beispielsweise für einen Betrieb bei 14 V Spannung ausgelegt sind. Nach einer Ausführungsform ist vorgesehen, dass die Lithium-Ionen-Batterie 40 die Versorgung von Ruhestromverbrauchern, welche als Verbraucher 25, 29 dargestellt sind, bei abgestelltem Fahrzeug übernimmt. Beispielsweise kann vorgesehen sein, dass hierbei die Anforderungen des so genannten Flughafentests erfüllt werden, wobei nach sechs Wochen Standzeit das Fahrzeug noch startbar ist und wobei die Batterie während der Standzeit die Ruheströme der Niederspannungsverbraucher 29 im Niederspannungsteilnetz 21 bereitstellt, damit beispielsweise eine Diebstahlwarnanlage versorgt wird.

Im Niederspannungsteilnetz 21 ist optional ein Hochleistungsspeicher 28 oder Pufferspeicher angeordnet, der kurzzeitig sehr hohe Leistung abgeben kann, d. h. auf Hochleistung optimiert ist. Der Hochleistungsspeicher 28 erfüllt den Zweck, dass Überspannungen bei einem Umschalten der Batterieeinheiten 41 weiter vermieden werden. Wird als Hochleistungsspeicher 28 ein Kondensator eingesetzt, so ist dessen Dimensionierung bevorzugt:

$$C = \frac{I_{\max} \cdot t_{umschalt}}{\Delta U_{\max}},$$

wobei $I_{\max}$ der maximale Bordnetzstrom ist, der während der Umschaltvorgänge im Bordnetz fließen kann, $t_{umschalt}$ die Zeitdauer, während welcher keine Batterieeinheit 41 für die Versorgung bereit steht, und $\Delta U_{\max}$ die maximal zulässige Veränderung der Bordnetzspannung während des Umschaltvorgangs.

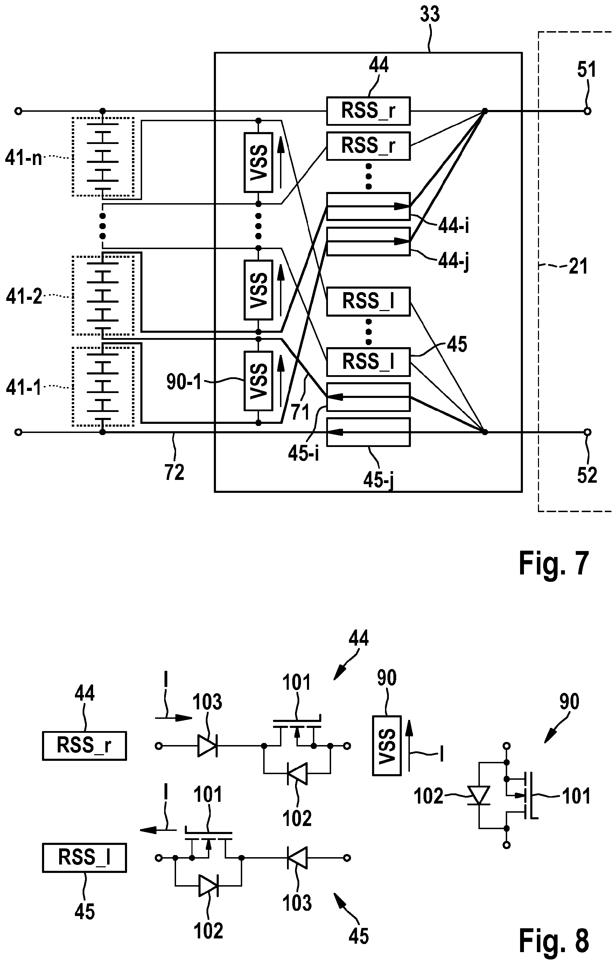

Figur 5 zeigt eine Koppeleinheit 33, die als unidirektionaler, galvanisch nicht trennender Gleichspannungswandler (DC/DC-Wandler) ausgeführt ist. Die Koppeleinheit 33 umfasst rückwärtssperrfähige Schalter 44, 45, welche die Eigenschaft aufweisen, dass sie in einem Zustand "ein" einen Stromfluss nur in eine Richtung ermöglichen und in einem zweiten Zustand "aus" eine Sperrspannung beiderlei Polarität aufnehmen können. Dies ist ein wesentlicher Unterschied zu einfachen Halbleiterschaltern, wie z.B. IGBT-Schaltern, da diese in Rückwärtsrichtung aufgrund ihrer intrinsischen Diode keine Sperrspannung aufnehmen können. Aufgrund der Abhängigkeit von der Stromflussrichtung sind in Figur 5 zwei verschiedene Schaltertypen eingezeichnet, nämlich RSS_l45 und RSS_r44, die sich in ihrer Fertigung nicht unterscheiden müssen, sondern lediglich mit unterschiedlicher Polarität verbaut sind. Ein Beispiel für den näheren Aufbau der rückwärtssperrfähigen Schalter 44, 45 wird mit Bezug zu Figur 8 beschrieben.

In der Koppeleinheit 33 sind die Einzelabgriffe 80 der Batterieeinheiten 41 jeweils einem der unterschiedlichen rückwärtssperrfähigen Schalter RSS_l45 und RSS_r44 zugeführt. Die rückwärtssperrfähigen Schalter RSS_l45 sind ausgangsseitig der Koppeleinheit 33 mit dem Pluspol 52 verschaltet, und die rückwärtssperrfähigen Schalter RSS_r44 sind ausgangsseitig der Koppeleinheit 33 auf den Minuspol 51 geschaltet.

Die Koppeleinheit 33 umfasst vorwärtssperrfähige Schalter VSS 90, welche beispielsweise Standard-Halbleiterschalter sein können. Ein Beispiel für den näheren Aufbau der vorwärtssperrfähigen Schalter 90 wird mit Bezug zu Figur 8 beschrieben. In der Koppeleinheit 33 sind die Einzelabgriffe der Batterieeinheiten 41 verzweigt und parallel zu den rückwärtssperrfähigen Schaltern jeweils einem vorwärtssperrfähigen Schalter VSS 90 zugeführt. Die vorwärtssperrfähigen Schalter VSS 90 verbinden die Batterieeinheiten 41 seriell miteinander, falls die Schalter 90 geschlossen sind. Dabei ist zwischen jeweils zwei Batterieeinheiten 41 ein vorwärtssperrfähiger Schalter VSS 90 angeordnet, sodass sich bei n Batterieeinheiten 41 n-1 vorwärtssperrfähige Schalter VSS 90-1, VSS 90-2, ...VSS 90-n-1 vorgesehen sind.

Mit dem Bezugszeichen 73 ist der Strompfad durch die Batterieeinheiten 41 zur Versorgung des Hochspannungsteilnetzes dargestellt. Sämtliche vorwärtssperrfähigen Schalter 90 sind dabei geschlossen.

Die Spannungslage des Hochspannungsteilnetzes 20 bezogen auf die Masse des Niederspannungsteilnetzes 21 hängt davon ab, welche der Batterieeinheiten 41 zugeschaltet ist bzw. sind. In keinem der Betriebszustände weist eines der Potentiale jedoch einen Betrag auf, der eine Spannungsgrenze in Höhe der Summe der Hochspannung und der Niederspannung überschreitet, d.h. bei einem 48-Volt-Netz und einem 14-Volt-Netz in etwa 62 Volt. Es können jedoch negative Potentiale gegenüber der Masse des Niederspannungsteilnetzes 21 auftreten.

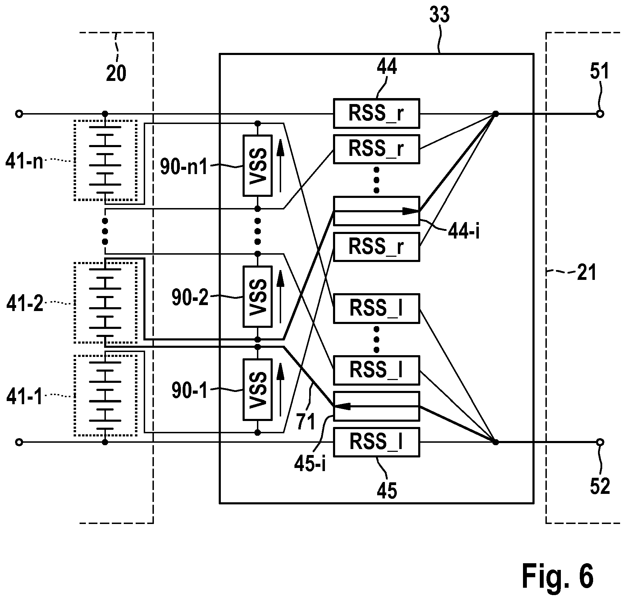

Figur 6 zeigt die Versorgung des Niederspannungsteilnetzes 21 beispielhaft aus der Batterieeinheit 41-2 über die eingeschalteten rückwärtssperrfähigen Schalter RSS_l45-i, RSS_r44-i. Vom Pluspol 52 führt dabei ein Strompfad 71 über den rückwärtssperrfähigen Schalter RSS_l45-i über die zweite durchgeschaltete Batterieeinheit 41-2 über den weiteren rückwärtssperrfähigen Schalter RSS_r 44-i zum Minuspol 51.

Die Verwendung der vorwärtssperrfähigen Schalter 90 ermöglicht es, zwei oder mehr Teilbatterien 41 zur Versorgung des Niederspannungsteilnetzes 21 parallel zu schalten. In diesem Fall werden die vorwärtssperrfähigen Schalter 90 in den Zustand "Aus" gesteuert. Bei einem unterschiedlichen Spannungsniveau der parallel geschalteten Batterieeinheiten 41 erfolgt der Energiefluss in das Niederspannungsteilnetz 21 nur aus derjenigen Teilbatterie 41, die das höhere Spannungsniveau aufweist. Der Energiefluss von der Teilbatterie 41 mit der höheren Spannungslage in die Teilbatterie 41 mit der niedrigeren Spannungslage wird durch rückwärtssperrfähigen Schalter 44, 45 unterbunden, die der Teilbatterie 41 mit der geringeren Spannung zugeordnet sind. Während der Parallelschaltung von Teilbatterien 41 sind die vorwärtssperrfähigen Schalter 90 ausgeschaltet und der Generator speist idealerweise keine Energie in das Hochspannungsteilnetz 20 ein.

Nach einer Ausführungsform ist das Bordnetz bzw. das Steuersystem so eingerichtet, dass die Batterie 40 den Starter-Generator 30 nur bei eingeschalteten vorwärtssperrfähigen Schaltern 90 mit Energie zu versorgen vermag. Für das Laden der Batterie 40 müssen die vorwärtssperrfähigen Schalter 90 nicht zwingend eingeschaltet sein, da die intrinsischen Dioden der vorwärtssperrfähigen Schalter 90 den Ladestrom führen können. Bevorzugt werden die vorwärtssperrfähigen Schalter 90 immer dann eingeschaltet, wenn kein Parallelbetrieb für die Versorgung des Niederspannungsteilnetzes 21 stattfindet, um die Verlustleistung innerhalb der vorwärtssperrfähigen Schalter 90 zu reduzieren.

Der Betrieb des Starter-Generators 30 ist unabhängig von dem Betrieb der Koppeleinheit 33 und der Versorgung des Niederspannungsteilnetzes 21. In der durchgeschalteten Batterieeinheit 41, die das Niederspannungsteilnetz 21 versorgt, ergibt sich eine Überlagerung durch den Niederspannungsteilnetzstrom und den ggf. vom Starter-Generator 30 in die gesamte Batterie 40 eingespeisten Ladestrom (Generatorbetrieb) bzw. durch den der gesamten Batterie 40 entnommenen Entladestrom (Motorbetrieb). Solange die zulässigen Grenzen der Batteriezellen, z.B. der maximal zulässige Entladestrom der Zellen, nicht überschritten werden, können diese Vorgänge unabhängig voneinander betrachtet werden. Damit das Niederspannungsteilnetz 21 sicher versorgt wird, wird immer zumindest eine der Batterieeinheiten 41 über die zugehörigen Schalter 44, 45, 90 der Koppeleinrichtung 33 zugeschaltet. Aufgrund der mehrfach redundanten Versorgung des Niederspannungsteilnetzes 21 kann mit der vorgestellten Architektur ein System aufgebaut werden, welches eine sehr hohe Verfügbarkeit der elektrischen Energie im Niederspannungsteilnetz 21 aufweist.

Figur 7 zeigt die Versorgung des Niederspannungsteilnetzes 21 beispielhaft aus den Batterieeinheiten 41-1, 41-2 über die eingeschalteten rückwärtssperrfähigen Schalter RSS_l 45-i, RSS_l45-j, RSS_r 44-i, RSS_r 44-j. Vom Pluspol 52 führt ein erster Strompfad 71 über einen rückwärtssperrfähigen Schalter RSS_l45-i über die zweite durchgeschaltete Batterieeinheit 44-2 und über den weiteren rückwärtssperrfähigen Schalter RSS_r44-i zum Minuspol 51. Vom Pluspol 52 führt außerdem ein weiterer Strompfad 72 über den rückwärtssperrfähigen Schalter RSS_l45-j über die erste durchgeschaltete Batterieeinheit 41-1 über den weiteren rückwärtssperrfähigen Schalter RSS_r44-j zum Minuspol 51. Wenn der Schalter 90-1 geöffnet ist, sind die erste Batterieeinheit 41-1 und die zweite Batterieeinheit 41-2 bezüglich des Niederspannungsteilnetzes 21 parallel geschaltet.

Figur 8 zeigt einen möglichen Aufbau von rückwärtssperrfähigen Schaltern 44, 45 und vorwärtssperrfähigen Schaltern 90. Die Durchlassrichtung der Schalter ist dabei mit I angegeben. Ein rückwärtssperrfähiger Schalter RSS_r 44 umfasst beispielsweise einen IGBT, MOSFET oder Bipolartransistor 101 und eine in Serie dazu geschaltete Diode 103. In Figur 8 ist ein MOSFET dargestellt, welcher eine mit dargestellte, intrinsische Diode 102 aufweist. Die zu dem MOSFET 101 in Serie geschaltete Diode 103 ist entgegen der Richtung der intrinsischen Diode 102 des MOSFET 101 gepolt. Der rückwärtssperrfähige Schalter RSS_r 44 lässt den Strom in Durchlassrichtung I durch und sperrt in entgegengesetzter Richtung. Der rückwärtssperrfähige Schalter RSS_l45 entspricht dem RSS_r44, wird lediglich mit der umgekehrten Polarität verbaut, so dass die Durchlass- und Sperrrichtungen vertauscht sind. Ein vorwärtssperrfähiger Schalter 90 umfasst einen MOSFET, IGBT oder Bipolartransistor 101, wobei dessen intrinsische Diode 102 mit dargestellt ist. Die Schalter RSS_l45, RSS_r 44 und VSS 90 zeichnen sich insbesondere auch durch eine kaum merkliche Verzögerung bei den Schaltvorgängen aus, d. h. erlauben eine sehr kurze Umschaltdauer. Über eine geeignete Ansteuerschaltung kann die Zeitverzögerung zwischen dem Ausschalten und dem Einschalten der Schalter sehr genau eingestellt werden.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

**Patentansprüche**

1. Bordnetz (1) für ein Kraftfahrzeug, wobei das Bordnetz (1) ein Niederspannungsteilnetz (21) für zumindest einen Niederspannungsverbraucher (29) und ein Hochspannungsteilnetz (20) für zumindest einen Hochspannungsverbraucher (25) und einen Starter-Generator (30) aufweist, wobei das Hochspannungsteilnetz (20) mit dem Niederspannungsteilnetz (21) über eine Koppeleinheit (33) verbunden ist, welche eingerichtet ist, dem Hochspannungsteilnetz (20) Energie zu entnehmen und dem Niederspannungsteilnetz (21) zuzuführen, wobei das Hochspannungsteilnetz (20) eine Batterie (40) aufweist, die eingerichtet ist, die Hochspannung zu erzeugen und an das Hochspannungsteilnetz (20) auszugeben, und die zumindest zwei Batterieeinheiten (41) mit Einzelspannungsabgriffen (42) aufweist, die an die Koppeleinheit (33) geführt sind, wobei die Koppeleinheit (33) vorwärtssperrfähige Schalter (90) aufweist, wobei die vorwärtssperrfähigen Schalter (90) einen MOSFET, IGBT oder Bipolartransistor (101) und eine intrinsische Diode (102) umfassen, **dadurch gekennzeichnet, dass** die vorwärtssperrfähigen Schalter (90) die Batterieeinheiten (41) seriell miteinander verbinden, und die Koppeleinheit (33) eine Mehrzahl von rückwärtssperrfähigen Schaltern (44, 45) aufweist, wobei die rückwärtssperrfähigen Schalter (44, 45) einen IGBT, MOSFET oder Bipolartransistor (101) umfassen und eine in Serie dazu geschaltete Diode (103) umfassen, wobei die Diode (103) entgegen der Richtung einer intrinsischen Diode (102) des rückwärtssperrfähigen Schalters (44, 45) geschaltet ist, wobei jeweils ein rückwärtssperrfähiger Schalter (44) am Pluspol einer Batterieeinheit (41) und ein rückwärtssperrfähiger Schalter (45) am Minuspol einer Batterieeinheit (41) angeschlossen ist, wobei die rückwärtssperrfähigen Schalter (45) ausgangsseitig der Koppeleinheit (33) mit einem Pluspol (52) des Niederspannungsteilnetzes (21) verschaltet, und die rückwärtssperrfähigen Schalter (44) ausgangsseitig der Koppeleinheit (33) auf einen Minuspol (51) des Niederspannungsteilnetzes (21) geschaltet sind, wobei die Koppeleinheit (33) eingerichtet ist, die Batterieeinheiten (41) dem Niederspannungsteilnetz (21) selektiv zuzuschalten.

2. Bordnetz (1) nach Anspruch 1, **dadurch gekennzeichnet, dass** die Batterieeinheiten (41) jeweils zur Bereitstellung der Niederspannung ausgelegt sind.

3. Bordnetz (1) nach einem der vorhergehenden Ansprüche, **dadurch gekennzeichnet, dass** die Koppeleinheit (33) eingerichtet ist, zumindest zwei Batterieeinheiten (41) bezüglich des Niederspannungsteilnetzes (21) miteinander parallel zu schalten.

4. Bordnetz (1) nach einem der vorhergehenden Ansprüche, **dadurch gekennzeichnet, dass** die Koppeleinheit (33) eingerichtet ist, zumindest zwei Batterieeinheiten (41) bezüglich des Hochspannungsteilnetzes (20) seriell zu schalten.

**5.** Bordnetz (1) nach einem der vorhergehenden Ansprüche, **dadurch gekennzeichnet, dass** das Niederspannungsteilnetz (21) einen Kondensator (28) aufweist.

**6.** Bordnetz (1) nach einem der vorhergehenden Ansprüche, **dadurch gekennzeichnet, dass** das Bordnetz (1) ein Steuergerät zur Steuerung der Koppeleinheit (33) zur Schaltung der Batterieeinheiten (41) aufweist.

**7.** Kraftfahrzeug mit einem Verbrennungsmotor und einem Bordnetz (1) nach einem der Ansprüche 1 bis 86.

**Claims**

**1.** Onboard electrical system (1) for a motor vehicle, wherein the onboard electrical system (1) has a low voltage subsystem (21) for at least one low voltage load (29) and a high voltage subsystem (20) for at least one high voltage load (25) and a starter generator (30), wherein the high voltage subsystem (20) is connected to the low voltage subsystem (21) by means of a coupling unit (33) that is set up to draw power from the high voltage subsystem (20) and to supply it to the low voltage subsystem (21), wherein the high voltage subsystem (20) has a battery (40) that is set up to produce the high voltage and to output it to the high voltage subsystem (20), and that has at least two battery units (41) having individual voltage taps (42) that are routed to the coupling unit (33), wherein the coupling unit (33) has switches with forward blocking capability (90), wherein the switches with forward blocking capability (90) comprise a MOSFET, IGBT or bipolar transistor (101) and an intrinsic diode (102), **characterized in that** the switches with forward blocking capability (90) connect the battery units (41) in series with one another, and the coupling unit (33) has a plurality of switches with reverse blocking capability (44, 45), wherein the switches with reverse blocking capability (44, 45) comprise an IGBT, MOSFET or bipolar transistor (101) and comprise a diode (103) connected in series therewith, wherein the diode (103) is connected in the opposite direction to an intrinsic diode (102) of the switch with reverse blocking capability (44, 45), wherein in each case a switch with reverse blocking capability (44) is connected at the positive pole of a battery unit (41) and a switch with reverse blocking capability (45) is connected at the negative pole of a battery unit (41), wherein the switch with reverse blocking capability (45) is connected to a positive pole (52) of the low voltage subsystem (21) on the output side of the coupling unit (33), and the switch with reverse blocking capability (44) is connected to a negative pole (51) of the low voltage subsystem (21) on the output side of the coupling unit (33), wherein the coupling unit (33) is set up to selectively connect the battery units (41) to the low voltage subsystem (21).

**2.** Onboard electrical system (1) according to Claim 1, **characterized in that** the battery units (41) are each designed to provide the low voltage.

**3.** Onboard electrical system (1) according to either of the preceding claims, **characterized in that** the coupling unit (33) is set up to connect at least two battery units (41) in parallel with one another for the low voltage subsystem (21).

**4.** Onboard electrical system (1) according to one of the preceding claims, **characterized in that** the coupling unit (33) is set up to connect at least two battery units (41) in series for the high voltage subsystem (20).

**5.** Onboard electrical system (1) according to one of the preceding claims, **characterized in that** the low voltage subsystem (21) has a capacitor (28).

**6.** Onboard electrical system (1) according to one of the preceding claims, **characterized in that** the onboard electrical system (1) has a controller for controlling the coupling unit (33) for the purpose of connecting the battery units (41).

**7.** Motor vehicle having an internal combustion engine and an onboard electrical system (1) according to one of Claims 1 to 6.

**Revendications**

**1.** Réseau de bord (1) destiné à un véhicule automobile, le réseau de bord (1) comportant un sous-réseau à basse tension (21) destiné à au moins un consommateur à basse tension (29) et un sous-réseau à haute tension (20) destiné à au moins un consommateur à haute tension (25) et un générateur de démarrage (30), le sous-réseau à haute tension (20) étant relié au sous-réseau à basse tension (21) par le biais d'une unité de couplage (33) qui est conçue pour prélever l'énergie sur le sous-réseau à haute tension (20) et l'amener au sous-réseau à basse tension (21), le sous-réseau à haute tension (20) comportant une batterie (40) qui est conçue pour générer la haute tension et la délivrer au sous-réseau à haute tension (20) et qui comporte au moins deux unités de batterie (41) pourvues de prises de tension individuelles (42) qui sont connectées à l'unité de couplage (33),
l'unité de couplage (33) comportant des commutateurs (90) blocables dans le sens direct, les commutateurs (90) blocables dans le sens direct comprenant un transistor MOSFET, IGBT ou bipolaire (101) et une diode intrinsèque (102), **caractérisé en ce que** les commutateurs (90) blocables dans le sens direct relient les unités de batterie (41) en série les unes aux autres, et l'unité de couplage (33) comporte une pluralité de commutateurs (44, 45) blocables dans le sens inverse, les commutateurs (44, 45) blocables dans le sens inverse comprenant un transistor IGBT, MOSFET ou bipolaire (101) et une diode (103) montée en série avec celui-ci, la diode (103) étant commutée dans le sens opposé au sens d'une diode intrinsèque (102) du commutateur (44, 45) blocable dans le sens inverse, un commutateur (44) blocable dans le sens inverse étant raccordé à la borne positive d'une unité de batterie (41) et un commutateur (45) blocable dans le sens inverse étant raccordé à la borne négative d'une unité de batterie (41), le commutateur (45) blocable dans le sens inverse étant raccordé en sortie de l'unité de couplage (33) à un pôle positif (52) du sous-réseau à basse tension (21) et le commutateur (44) blocable dans le sens inverse étant raccordé en sortie de l'unité de couplage (33) à un pôle négatif (51) du sous-réseau à basse tension (21), l'unité de couplage (33) étant conçue pour raccorder sélectivement les unités de batterie (41) au sous-réseau à basse tension (21).

2. Réseau de bord (1) selon la revendication 1, **caractérisé en ce que** les unités de batteries (41) sont chacune conçues pour fournir la basse tension.

3. Réseau de bord (1) selon l'une des revendications précédentes, **caractérisé en ce que** l'unité de couplage (33) est conçue pour monter au moins deux unités de batterie (41) en parallèle l'une à l'autre par rapport au sous-réseau à basse tension (21).

4. Réseau de bord (1) selon l'une des revendications précédentes, **caractérisé en ce que** l'unité de couplage (33) est adaptée pour monter au moins deux unités de batterie (41) en série par rapport au sous-réseau à haute tension (20).

5. Réseau de bord (1) selon l'une des revendications précédentes, **caractérisé en ce que** le sous-réseau à basse tension (21) comporte un condensateur (28).

6. Réseau de bord (1) selon l'une des revendications précédentes, **caractérisé en ce que** le réseau de bord (1) comporte un dispositif de commande destiné à commander l'unité de couplage (33) pour commuter les unités de batterie (41).

7. Véhicule automobile comprenant un moteur à combustion interne et un réseau de bord (1) selon l'une des revendications 1 à 6.

Fig. 1

Fig. 2

Fig. 3

Fig. 4

Fig. 5

Fig. 6

Fig. 7

Fig. 8

**IN DER BESCHREIBUNG AUFGEFÜHRTE DOKUMENTE**

**In der Beschreibung aufgeführte Patentdokumente**

- DE 10057259 A1

- WO 0137393 A1